# FASCICULE DE BREVET EUROPEEN

(11) **EP 3 609 745 B1**
(45) Date de publication et mention de la délivrance du brevet: **03.03.2021**
(21) Numéro de dépôt: 18713245.1
(22) Date de dépôt: 28.03.2018
(51) Int. Cl.: B60S 1/46, F16K 17/28

(54) **DISPOSITIF LIMITEUR DE PRESSION EQUIPANT UN DISPOSITIF DE DISTRIBUTION DE LIQUIDE LAVE-GLACE POUR UN VEHICULE AUTOMOBILE**
DRUCKBEGRENZER AUF EINER VORRICHTUNG ZUR ABGABE EINER WINDSCHUTZSCHEIBENWASCHFLÜSSIGKEIT FÜR EIN KRAFTFAHRZEUG
PRESSURE LIMITING DEVICE FITTED TO A DEVICE FOR DISPENSING WINDSCREEN-WASHING FLUID FOR A MOTOR VEHICLE

(30) Priorité: 10.04.2017 FR 1753094
(43) Date de publication de la demande: 19.02.2020
(73) Titulaire: Valeo Systèmes d'Essuyage, 78322 Le Mesnil Saint Denis (FR)
(72) Inventeur: CHASSAING, Christophe, 63500 Issoire (FR); CARRARO, Philippe, 63500 Issoire (FR); GAUCHER, Vincent, 63500 Issoire (FR)
(74) Mandataire: Valeo Visibility
(86) Numéro de dépôt international: PCT/EP2018/057849
(87) Numéro de publication internationale: WO 2018/188951

(56) Documents cités:
- EP-A1- 1 672 259
- BE-A- 822 259
- DE-C1- 3 517 136
- JP-U- S63 142 249
- US-A1- 2002 137 455

## Description

La présente invention se rapporte au domaine des systèmes de nettoyage d'une surface vitrée d'un véhicule automobile, et elle concerne plus particulièrement des systèmes dans lesquels un dispositif limiteur de pression équipe un dispositif de distribution de liquide lave-glace.

Les systèmes de nettoyage, couramment dénommés essuie-glace, pour véhicule automobile sont conçus pour nettoyer, essuyer et/ou dégivrer, par balayage, le pare-brise et/ou la lunette arrière d'un véhicule automobile. De tels systèmes comportent généralement un bras d'entraînement motorisé de sorte qu'il effectue un mouvement de va-et-vient en regard de la surface vitrée à nettoyer, ainsi qu'un balai d'essuyage destiné à être plaqué contre cette surface vitrée et connecté au bras d'entraînement. Le mouvement de balayage du système est effectué simultanément, ou à la suite, d'une projection de liquide de nettoyage et/ou de dégivrage, autrement appelé liquide lave-glace On connait des buses de projection d'un tel liquide qui sont disposées à la périphérie de la vite à nettoyer et qui sont alimentées par des flexibles amenant le liquide depuis un réservoir de liquide lave-glace, par l'intermédiaire d'une pompe.

Récemment, les systèmes de nettoyage comportent des bras et des balais agencés de manière à embarquer les buses de projection, afin d'amener le liquide lave-glace au plus près des balais d'essuyage en vue d'améliorer la précision et l'efficacité du nettoyage et/ou du dégivrage de la surface vitrée. Dans ce cas, le balai d'essuyage est pourvu d'au moins une rampe d'acheminement, qui permet l'alimentation en liquide lave-glace des buses de projection embarqués sur le balai, et d'un connecteur hydraulique agencé entre une arrivée du liquide lave-glace et la rampe d'acheminement et de projection du liquide lave-glace. Dans cet agencement, les moyens de projection du liquide lave-glace sont constitués d'orifices de projection répartis le long de la rampe d'acheminement et de projection. Bien que très efficace, cette technologie présente cependant l'inconvénient d'être source de fuites lorsque la pression augmente dans de trop fortes proportions dans le circuit de liquide lave-glace. Une telle situation peut notamment apparaitre lorsque des orifices de projection de la rampe d'acheminement et de projection sont bouchés, par exemple par le gel en cas de températures extérieures négatives. Le liquide lave-glace, distribué par la pompe, ne peut alors s'évacuer normalement par les orifices de projection, ce qui a pour effet de créer une surpression dans le circuit et des fuites, notamment au niveau des connexions du connecteur hydraulique. Or, dans le cas d'un dispositif de projection embarqué tel qu'il vient d'être présenté, le connecteur hydraulique est situé au raccordement du bras et du balai et une fuite de liquide au niveau de ce connecteur est alors visible par le conducteur, ce qui est d'autant plus préjudiciable quant à la notion de qualité perçue du véhicule JP S63 142.249 U divulgue un dispositif limiteur de pression selon le préambule de la revendication 1.

L'invention a pour objectif d'apporter une solution à ce problème en proposant un dispositif limiteur de pression apte à être connecté sur le circuit de liquide lave-glace et à éviter des fuites au niveau du raccordement du bras et du balai d'essuyage en cas de surpression.

L'invention a pour objet un dispositif limiteur de pression d'un fluide circulant dans un système de nettoyage d'au moins une surface vitrée, avant et/ou arrière, d'un véhicule automobile, apte à être raccordé à une pompe de liquide lave-glace, qui fournit la pression et le débit de liquide adapté, et à au moins un balai d'essuyage comportant au moins une rampe d'acheminement et de projection du liquide lave-glace sur laquelle sont répartis, dans la direction longitudinale, des orifices de projection.

Le dispositif limiteur de pression selon un premier aspect de l'invention comporte un premier organe mobile comportant une portion mobile insérée dans un conduit interne d'un deuxième organe fixe. La portion mobile du premier organe mobile est constituée d'au moins un élément déformable élastiquement et d'un élément d'obturation du conduit interne du deuxième organe fixe. L'élément déformable élastiquement est apte à s'allonger, dans le sens de circulation du liquide lave-glace, sous l'effet d'une poussée du liquide lave-glace sur l'élément d'obturation. L'élément déformable élastiquement est configuré pour porter à son extrémité libre aval l'élément d'obturation, qui peut présenter une tête de forme complémentaire à celle d'une portion d'étranglement du conduit interne du deuxième organe fixe. De préférence, l'élément d'obturation a la forme d'une tête conique, et est apte à obstruer la portion du conduit interne qui présente un rétrécissement de section, de préférence tronconique. En cas de suppression, toute circulation du liquide lave-glace en direction de l'extrémité de sortie du dispositif limiteur de pression est empêchée.

Avantageusement, la portion mobile du premier organe mobile, en particulier l'élément déformable élastiquement, est apte à s'allonger lorsque la pression de liquide lave-glace qui le traverse est supérieure à 1,5 bar.

Dans un premier mode de réalisation, le dispositif limiteur de pression selon l'invention comporte avantageusement l'une quelconque au moins des caractéristiques suivantes, prises seules ou en combinaison :
- la portion mobile est mobile entre une première position, ou position de repos, autorisant le passage de liquide lave-glace à travers le conduit interne d'une extrémité amont à une extrémité aval du dispositif, et une deuxième position obstruant le conduit interne du deuxième organe fixe ;
- le premier organe mobile est constitué, de l'amont vers l'aval, d'un raccord d'entrée du liquide lave-glace dans le dispositif limiteur de pression, d'un collet et de la portion mobile ;
- le raccord d'entrée, qui constitue l'extrémité d'entrée du dispositif limiteur de pression, comporte un embout, de préférence de forme conique, apte à se loger dans un tuyau d'arrivée de liquide lave-glace raccordé à une pompe et une gorge périphérique apte à améliorer l'étanchéité de la connexion du raccord d'entrée au tuyau d'arrivée de liquide lave-glace ;
- le collet, de préférence cylindrique, constitue une surépaisseur apte à venir en butée d'arrêt dans un lamage du deuxième organe fixe ;
- la distance entre l'extrémité libre de l'élément d'obturation et le collet, lorsque la portion mobile est dans sa position de repos, est inférieure à la distance entre le lamage et la portion d'étranglement du deuxième organe fixe ;
- l'élément déformable élastiquement est constitué d'au moins deux parois en opposition reliées entre elles à une extrémité et connectées respectivement à une base portant le collet et à l'élément d'obturation ou à une portion intermédiaire connectée à l'élément d'obturation ;
- les parois en opposition comportent chacune un orifice traversant ;
- l'élément d'obturation possède une face d'obstruction du flux du liquide lave-glace, perpendiculaire à l'axe d'allongement du dispositif limiteur de pression ou inclinée par rapport à un plan perpendiculaire à cet axe d'allongement ;
- la face d'obstruction est pleine et ainsi apte à servir de butée au liquide lave-glace qui, lorsqu'il est en surpression, exerce une force de poussée sur cette face pleine ;
- le caractère élastique de l'élément déformable favorise l'allongement dudit élément dans le sens de circulation du liquide lave-glace en cas de surpression et permet le retour, par effet ressort, dudit élément déformable à la position initiale de repos lorsque la surpression est évacuée, notamment par retour du liquide lave-glace en sens inverse de circulation ;
- l'élément déformable élastiquement et l'élément d'obturation sont inscrits dans une enveloppe de diamètre externe inférieure au diamètre intérieur du conduit interne en amont de la portion d'étranglement ;
- le deuxième organe fixe, de forme sensiblement cylindrique, est constitué, de l'amont vers l'aval, d'une première extrémité, comportant un lamage apte à recevoir en butée le collet du premier organe mobile, et ouverte sur un conduit interne, apte à recevoir la portion mobile du premier organe mobile, et dans le prolongement de laquelle se trouve une portion d'étranglement, de préférence tronconique, apte à être obstruée par l'élément d'obturation du premier organe mobile en cas de surpression, suivi d'une gorge périphérique et d'un embout formant un raccord de sortie du liquide lave-glace qui constitue l'extrémité de sortie du dispositif limiteur de pression ;
- l'embout du raccord de sortie est de préférence de forme conique et est apte à se loger dans un tuyau de circulation de liquide lave-glace raccordé au balai ; la gorge périphérique est apte à améliorer l'étanchéité de la connexion du raccord de sortie au tuyau de circulation de liquide lave-glace.

On comprend qu'en position d'assemblage, lorsque le premier organe mobile est inséré dans le deuxième organe fixe, l'ensemble ainsi constitué forme un corps sensiblement cylindrique qui s'étend selon une direction déterminée par un axe longitudinal X, depuis le raccord d'entrée du liquide lave-glace du premier organe mobile, formant l'extrémité d'entrée amont du dispositif limiteur de pression, jusqu'au raccord de sortie du deuxième organe fixe formant l'extrémité de sortie aval du dispositif limiteur de pression

Dans un second mode de réalisation, le dispositif limiteur de pression selon l'invention comporte avantageusement l'une quelconque au moins des caractéristiques suivantes, prises seules ou en combinaison :
- le deuxième organe fixe comporte une canule de purge du liquide lave-glace, positionnée en amont de la portion d'étranglement du conduit interne et qui s'étend selon une direction perpendiculaire à la direction de ce conduit interne ;
- la canule de purge est apte à être connectée sur un tuyau d'évacuation du liquide lave-glace permettant le retour dudit liquide vers le réservoir de liquide lave-glace et/ou vers une évacuation standard ;
- l'agencement extérieur de la canule de purge constitue un raccord de purge pourvu d'une gorge périphérique et d'un embout, de préférence conique, aptes à se loger de manière étanche dans le tuyau d'évacuation ;
- la portion mobile du premier organe mobile comporte, entre l'élément déformable élastiquement et l'élément d'obturation, une portion cylindrique intermédiaire délimitée extérieurement par une enveloppe externe pleine munie au voisinage de l'élément d'obturation d'un orifice de dégagement latéral communiquant avec un conduit interne agencé à l'intérieur du premier organe mobile.

Dans ce second mode de réalisation, le dispositif limiteur de pression fixe s'apparente à un raccord trois voies où les voies correspondent au raccord d'entrée du premier organe mobile et aux raccords de sortie et de purge du deuxième organe fixe.

L'invention a aussi pour autre objet un dispositif de distribution de liquide lave-glace, caractérisé en ce qu'il comprend un dispositif limiteur de pression tel que précédemment décrit.

Le dispositif de distribution peut être tel que le dispositif limiteur de pression est positionné entre une pompe de liquide lave-glace et au moins un balai d'essuyage comportant des moyens de projection du liquide lave-glace constitués d'orifices de projection répartis dans la direction longitudinale du conduit formant la rampe d'acheminement et de projection du balai d'essuyage.

Dans un premier mode de réalisation du dispositif de distribution de liquide lave-glace, le dispositif limiteur de pression selon l'invention est connecté, par son raccord d'entrée, sur un tuyau d'arrivée de liquide lave-glace relié à la sortie de la pompe et, par son raccord de sortie sur un tuyau de circulation de liquide lave-glace relié au balai d'essuyage. De préférence, le tuyau de circulation de liquide lave-glace est relié au connecteur hydraulique balai d'essuyage par l'intermédiaire d'un raccord. Dans un second mode de réalisation du dispositif de distribution de liquide lave-glace, le dispositif limiteur de pression selon l'invention est également connecté, par son raccord de purge, sur un tuyau d'évacuation du liquide lave-glace permettant le retour dudit liquide vers le réservoir de liquide lave-glace et/ou vers une évacuation standard.

L'invention a aussi pour autre objet un système de nettoyage d'au moins une surface vitrée avant et/ou arrière d'un véhicule automobile comprenant un dispositif de distribution de liquide lave-glace équipé d'un dispositif limiteur de pression selon l'invention.

D'autres caractéristiques et avantages de l'invention apparaitront plus clairement à la lecture de la description détaillée des modes de réalisation de l'invention, donnée ci-après à titre d'exemples illustratifs et non limitatifs et s'appuyant sur les figures annexées, dans lesquelles on a illustré le dispositif limiteur de pression d'un système de nettoyage d'au moins une surface vitrée avant et/ou arrière d'un véhicule automobile, selon l'invention, et parmi lesquelles :
- la figure 1 est une vue générale, en perspective, d'un véhicule automobile équipé d'un système de nettoyage d'une surface vitrée conforme à un aspect de l'invention ;
- la figure 2 illustre en perspective un premier mode de réalisation d'un dispositif limiteur de pression conforme à un autre aspect de l'invention pour équiper le système de nettoyage de la figure 1 ;
- la figure 3 est une vue du dispositif limiteur de pression de la figure 2, dans laquelle on a découpé partiellement un organe fixe de ce dispositif limiteur de pression pour rendre visible l'agencement intérieur dudit dispositif limiteur de pression ;
- les figures 4 et 5 sont des vues de côté du dispositif limiteur de pression de la figure 3, lorsque ce dispositif limiteur de pression est respectivement en fonctionnement normal, dans une position standard, et en fonctionnement de surpression, dans une position d'obturation du canal de sortie ;
- la figure 6 est une illustration schématique des composants du système de nettoyage dans lequel est intégré un dispositif limiteur de pression selon un premier mode de réalisation de l'invention ;
- les figures 7 et 8 sont des coupes, en perspective, d'un dispositif limiteur de pression selon un second mode de réalisation de l'invention, respectivement en fonctionnement normal et en fonctionnement de surpression ; et
- la figure 9 est une illustration schématique des composants du système de nettoyage dans lequel est intégré un dispositif limiteur de pression selon un second mode de réalisation de l'invention.

Il convient de noter que si les figures exposent l'invention de manière détaillée pour sa mise en œuvre, elles peuvent également servir à mieux définir l'invention le cas échéant. On comprendra également que les modes de réalisation de l'invention illustrés par les figures sont donnés à titre d'exemple non limitatif. Par conséquent, d'autres configurations du dispositif limiteur de pression selon l'invention peuvent être réalisées, notamment par variations de l'agencement et du dimensionnement des premier et deuxième organes, respectivement mobile et fixe, constitutifs dudit dispositif limiteur de pression selon l'invention.

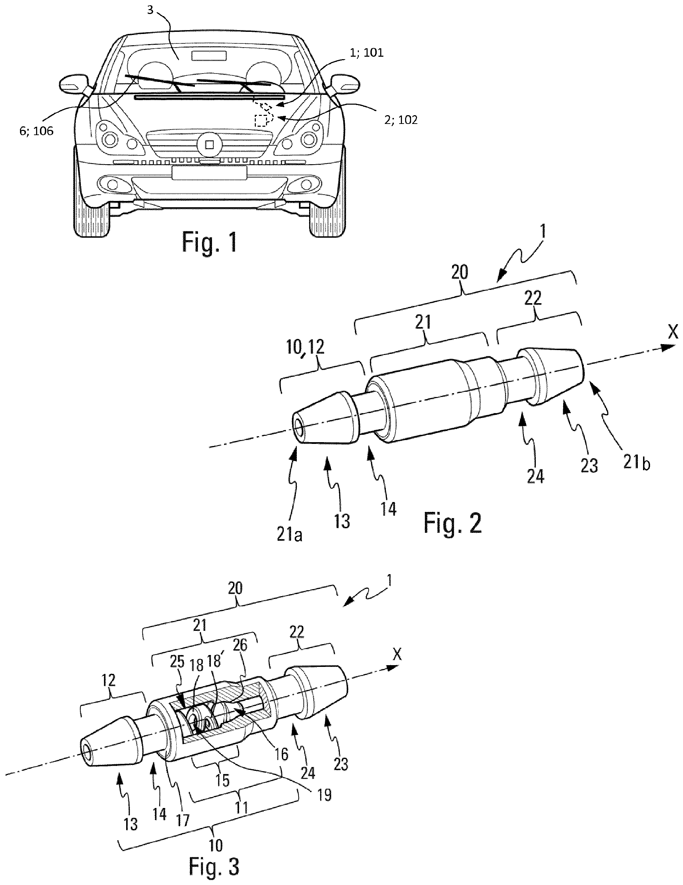

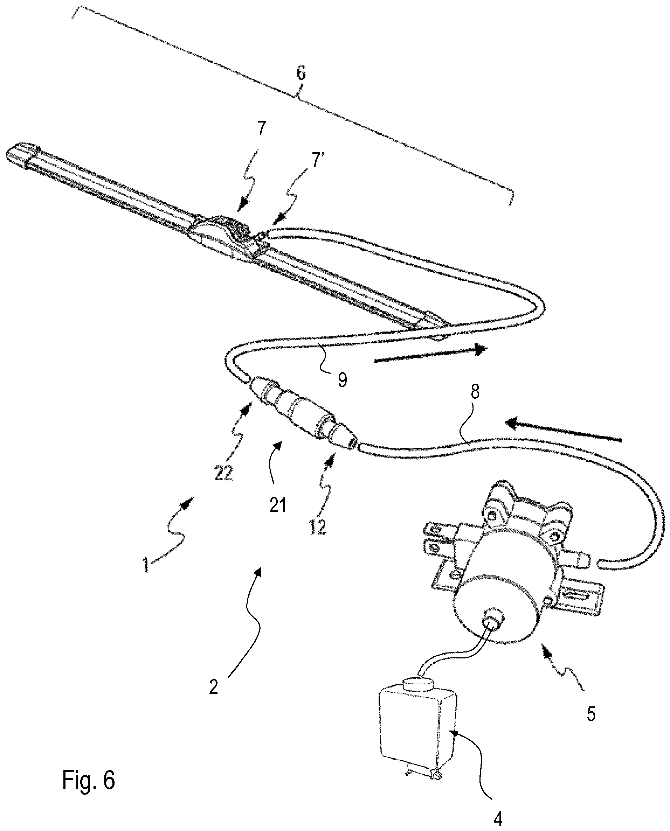

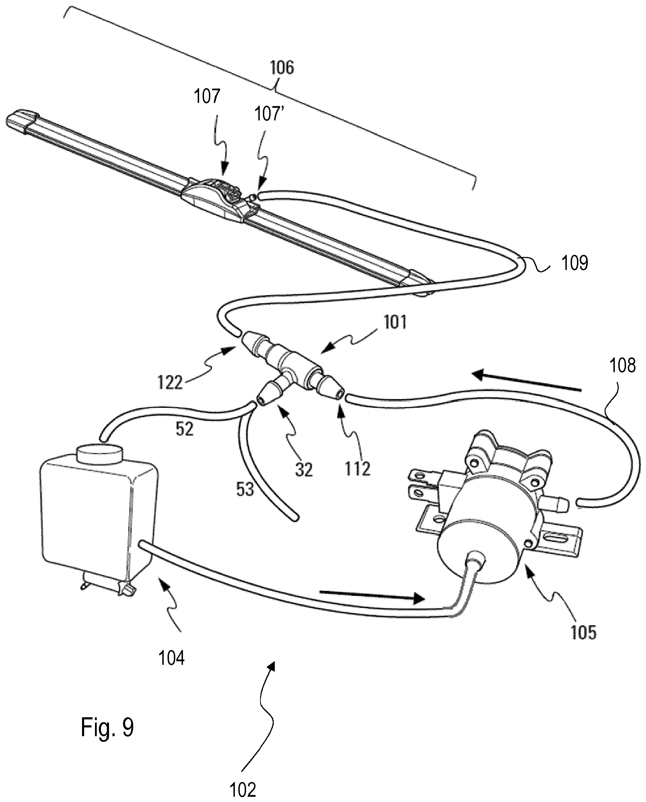

Un dispositif limiteur de pression 1, 101 selon un aspect de l'invention est destiné à être intégré à un dispositif de distribution 2, 102 d'un liquide lave-glace d'un système de nettoyage d'une surface vitrée 3 pare-brise et/ou d'une lunette arrière d'un véhicule automobile tel qu'illustré sur la figure 1. On comprend que sur cette figure on a représenté schématiquement en traits pointillés le dispositif limiteur de pression et la partie du dispositif de distribution 2, 102 d'un liquide lave-glace dans une position logée sous le capot du compartiment moteur du véhicule. Le système de nettoyage pris ici pour référence permet la circulation du liquide lave-glace depuis un réservoir 4, 104 relié à une pompe 5, 105 (visibles plus clairement sur les figures 6 et 9) jusqu'à un balai d'essuyage 6, 106 comportant une rampe d'acheminement et de projection du liquide lave-glace sur laquelle sont répartis, dans la direction longitudinale, des orifices de projection conformément à une technologie dite Aquablade™ telle que commercialisée par la demanderesse.

Le dispositif limiteur de pression 1, selon un premier mode de réalisation, est plus précisément illustré sur la figure 2 notamment. Le dispositif limiteur de pression selon un aspect de l'invention s'étend selon la direction déterminée par son axe longitudinal X, ledit axe illustrant également le sens de circulation du liquide lave-glace en fonctionnement normal du dispositif limiteur de pression 1.

Selon l'invention, le dispositif limiteur de pression 1 comporte un premier organe mobile 10 et un deuxième organe fixe 20, configurés pour que le premier organe mobile 10 puisse coulisser au moins partiellement à l'intérieur du deuxième organe fixe.

De l'amont vers l'aval, le dispositif limiteur de pression 1 comporte d'une part une extrémité d'entrée du liquide lave-glace formant un raccord d'entrée 12 porté par le premier organe mobile 10, et d'autre part un corps sensiblement cylindrique 21 et une extrémité de sortie dudit liquide lave-glace formant un raccord de sortie 22, porté par le deuxième organe fixe 20. Les raccords d'entrée 12 et de sortie 22, qui sont aptes à se loger respectivement dans un tuyau d'arrivée de liquide lave-glace et dans un tuyau de circulation dudit liquide (visibles en figure 6), sont chacun constitués d'un embout conique 13, 23 et d'une gorge périphérique 14, 24, apte à améliorer l'étanchéité de la connexion entre le raccord 12, 22 et le tuyau correspondant. En outre, le raccord d'entrée 12 comporte, en aval de la gorge périphérique 14, un collet 17.

La figure 3 illustre l'agencement intérieur du dispositif limiteur de pression 1 selon le premier mode de réalisation de l'invention, et elle illustre plus particulièrement la coopération entre le premier organe mobile 10 et le deuxième organe fixe 20, avec le premier organe mobile 10 qui comporte une portion mobile 11 insérée dans un conduit interne 25 dudit deuxième organe fixe 20.

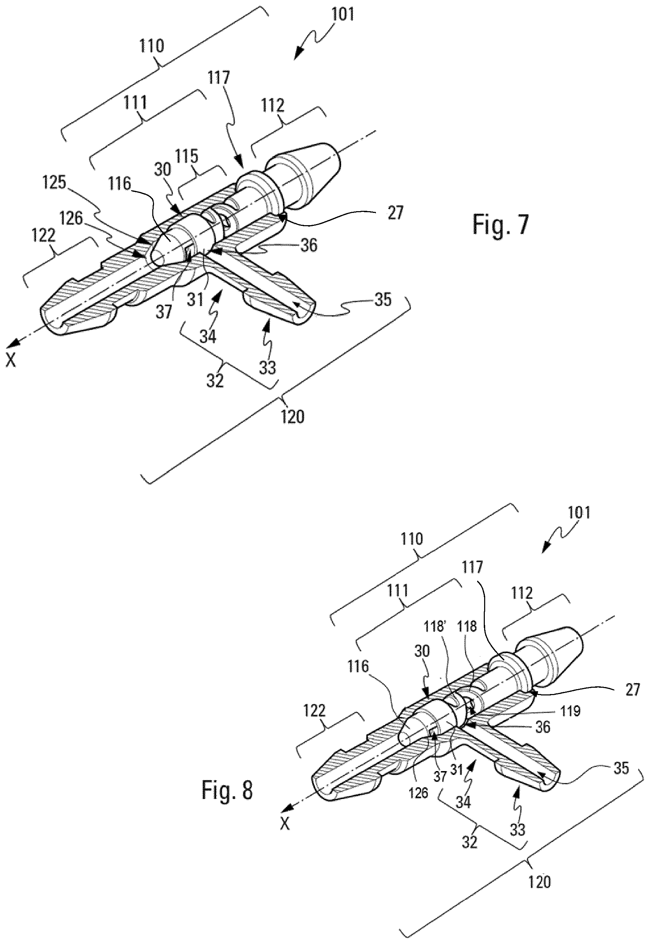

Le deuxième organe fixe 20 présente tel que cela a été décrit précédemment la forme d'un manchon de corps cylindrique 21, creusé en son centre de manière à définir le conduit interne 25 entre une extrémité amont 21a, au niveau de laquelle un lamage 27 (visible uniquement sur les figures 7 et 8, mais agencé de façon conforme dans le dispositif limiteur de pression selon le premier mode de réalisation) est réalisé pour former un épaulement de butée d'insertion du premier organe mobile 10 au niveau de son collet 17, et une extrémité aval 21b correspondant à l'orifice du raccord de sortie 22. Tel que visible sur les figures 3 à 5, le conduit interne 25 comporte une première partie amont qui s'étend depuis l'extrémité amont 21a jusqu'à une portion d'étranglement 26, c'est-à-dire une portion d'étranglement par rapport à la première partie amont, le conduit interne 25 se prolongeant jusqu'à l'extrémité aval 21b par une deuxième partie aval, de diamètre interne inférieure au diamètre interne D25 de la première partie amont.

Le premier organe mobile 10 est également percé d'un conduit interne, non visible sur les figures, pour la circulation du liquide lave-glace d'une extrémité amont à une extrémité aval.

Le premier organe mobile 10 est formé de la portion mobile 11, qui s'étend à l'intérieur de la première partie amont du conduit interne 25, et d'une portion fixe formant le raccord d'entrée 12 précédemment décrit et s'étendant au moins partiellement en dehors du deuxième organe fixe. On comprend que le collet 17 forme la jonction entre les deux portions du premier organe mobile 10, ce collet étant logé dans le lamage 27 du deuxième organe fixe 20. Le conduit interne du premier organe mobile s'étend au moins sur l'étendue de la portion fixe, de manière à ce que le liquide lave-glace arrivant par le raccord d'entrée 12 et donc la portion fixe puisse déboucher sur la portion mobile et agir sur celle-ci.

La portion mobile 11 est configurée de manière à s'inscrire dans une enveloppe de diamètre extérieur d11 inférieur au diamètre interne D25 du conduit interne 25 dans lequel est logé la portion mobile. De la sorte, le liquide de nettoyage et/ou de dégivrage peut circuler entre la paroi délimitant ce conduit interne 25 et la portion mobile 11 lorsque le premier organe mobile 10 est dans une position standard à l'intérieur du deuxième organe fixe 20.

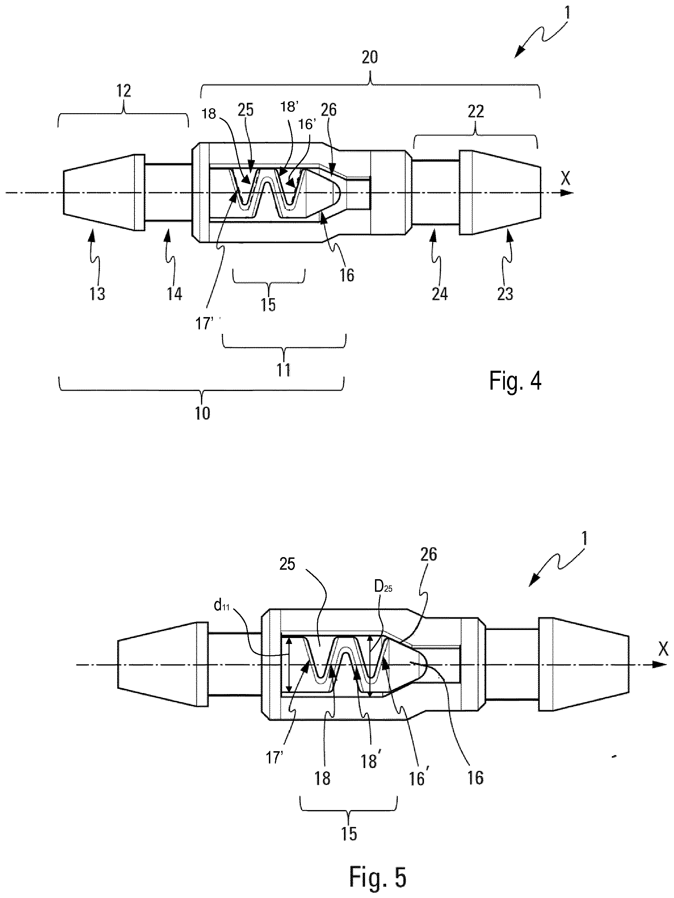

La portion mobile 11 comporte un élément déformable élastiquement 15 à l'extrémité duquel est disposé un élément d'obturation 16, agencé en travers du flux de liquide lave-glace à l'intérieur du dispositif limiteur de pression. L'élément d'obturation 16 comporte une face d'obstruction du flux 16', agencée en regard de l'élément déformable élastiquement 15 et donc tournée vers l'amont du dispositif limiteur de pression, et une tête de forme et de dimensions aptes à boucher la portion d'étranglement 26 lorsque la portion mobile est dans une configuration appropriée décrite plus en détails ci-après. Dans la position standard illustré sur la figure 4, dans laquelle l'élément déformable élastiquement 15 de la portion mobile 11 ne subit pas de contraintes susceptibles de le déformer, l'élément d'obturation 16 est disposé à distance de la portion d'étranglement 26, de manière à ce que le liquide lave-glace puisse contourner l'élément d'obturation et pénétrer dans la deuxième partie aval du conduit interne 25. Ceci est notamment dû au fait que la distance entre l'extrémité libre de l'élément d'obturation 16 et le collet 17, lorsque la portion mobile 11 est dans sa position de repos, est inférieure à la distance entre le lamage 27 et la portion d'étranglement 26 du deuxième organe fixe 20.

La présence d'un élément déformable élastiquement 15 permet à la portion mobile 11 de s'allonger, principalement dans le sens de circulation du liquide lave-glace, sous l'effet d'une part de la surpression générée par le fluide sur l'élément d'obturation 16 et d'autre part de la butée du collet 17 dans le lamage 27, jusqu'à ce que cet élément d'obturation 16 vienne en appui contre la portion d'étranglement 26, en obstruant, par complémentarité de formes, le passage pour le liquide lave-glace dans la deuxième partie aval du conduit interne 25.

Notamment, la surpression peut apparaitre dans le dispositif de distribution 2 du liquide lave-glace lorsque des orifices de projection de la rampe d'acheminement et de projection du balai d'essuyage 6 sont bouchés, par exemple par le gel, et que le liquide lave-glace, distribué par la pompe 5, ne peut s'évacuer normalement au niveau du balai. L'obstruction du conduit interne 25, plus particulièrement de la portion d'étranglement 26, par l'élément d'obturation 16 a pour effet d'empêcher toute circulation du liquide lave-glace en direction du raccord de sortie 22 du dispositif limiteur de pression 1 et d'éviter ainsi l'apparition de fuites dans le circuit, notamment au niveau des connexions d'un connecteur hydraulique 7 du balai d'essuyage 6 (notamment visible sur la figure 6).

On va maintenant décrire plus en détails la structure et le fonctionnement de la portion mobile 11 du premier organe mobile 10 en se référant aux figures 4 et 5, qui illustrent le dispositif limiteur de pression 1 selon le premier mode de réalisation de l'invention dans deux positions distinctes, montrant plus particulièrement l'évolution de l'allongement de la portion mobile 11 du premier organe mobile 10 et sa coopération avec le deuxième organe fixe 20 en cas de surpression.

La figure 4 illustre le dispositif limiteur de pression 1 en fonctionnement normal du dispositif de distribution 2 du liquide lave-glace, notamment lorsque la pression de liquide lave-glace est inférieure ou égale à 1,5 bar.

L'élément déformable élastiquement 15 de la portion mobile 11 est formé de deux parois 18, 18' en opposition l'une de l'autre et reliées entre elles à une première de leurs extrémités, ces deux parois étant agencées entre une base 17' formée dans le prolongement du collet 17 et l'élément d'obturation 16. Chacune de ces parois est percée en son centre d'un orifice traversant 19, dans le prolongement du conduit interne formé dans la portion fixe du premier organe mobile, de manière à laisser passage au liquide lave-glace dans la direction longitudinale selon laquelle s'étend principalement le dispositif de limitation de pression.

L'agencement de ces deux parois en opposition 18, 18' forme une structure en « V » susceptible de déformation élastique par écartement des parois l'une de l'autre. Dans le cas illustré, une première 18 des deux parois en opposition est raccordée à la base 17' et celle-ci présente une face inclinée en regard de cette première paroi, et la deuxième 18' des deux parois en opposition est raccordée à l'élément d'obturation 16 et celui-ci présente une face d'obstruction du flux 16' inclinée en regard de cette deuxième paroi, de manière à former une structure en « W », facilitant encore la déformation élastique en cas de surpression. On comprend que dans le mode de réalisation illustré, et dès lors que l'on a deux parois en opposition 18, 18' tel qu'illustré, on modélise l'élément déformable élastiquement 15 comme un ressort de traction déformable le long de la direction de circulation du liquide lave-glace.

En fonctionnement normal, lorsque le premier organe mobile est en position de repos, et du fait du diamètre externe de l'enveloppe dans laquelle sont inscrits l'élément déformable élastiquement 15 et l'élément d'obturation 16 qui est inférieur au diamètre interne du conduit interne 25 du deuxième organe fixe, le liquide lave-glace peut circuler librement, de l'amont vers l'aval du dispositif limiteur de pression, successivement à l'intérieur du conduit interne agencé dans la portion fixe du premier organe mobile 10, puis à travers les orifices traversants 19 des parois 18,18' de l'élément déformable élastiquement 15, puis vers les parois du conduit interne 25 du deuxième organe fixe 20 en contournant l'élément d'obturation 16 dont une face s'étend en travers de la circulation du fluide, et enfin à travers la portion d'étranglement 26 pour rejoindre le raccord de sortie 22.

Ce fonctionnement normal, avec un premier organe mobile en position de repos et notamment un élément déformable élastiquement 15 qui n'est ni comprimé ni étiré, se perpétue jusqu'à ce que l'effort du liquide lave-glace sur l'élément d'obturation 16 soit tel que la raideur du ressort de traction formé par l'élément déformable élastiquement 15 ne suffit pas à conserver la forme d'origine.

La figure 5 illustre le dispositif limiteur de pression 1 en surpression, c'est-à-dire lorsque la pression de liquide lave-glace est ici supérieure à 1,5 bar, habituellement entre 4 et 5 bar. Dans ce cas, le liquide lave-glace exerce une force de poussée sur la face d'obstruction du flux 16' de l'élément d'obturation qui provoque l'allongement de l'élément déformable élastiquement 15 dans le sens de circulation du liquide lave-glace, notamment par l'écartement l'une de l'autre des deux parois en opposition 18, 18' de l'élément élastique déformable, et ce jusqu'à permettre à l'élément d'obturation 16 d'atteindre la portion d'étranglement 26 du conduit interne 25 du deuxième organe fixe 20 et de l'obstruer. L'élément d'obturation 16 obstrue, par complémentarité de forme, la portion d'étranglement 26 du conduit interne 25 du deuxième organe fixe 20 et empêche toute circulation du liquide lave-glace en direction du raccord de sortie 22 du dispositif limiteur de pression 1. Dans une configuration préférée, l'élément d'obturation 16 a une forme de tête conique, apte à obstruer la portion 26 du conduit interne cylindrique du deuxième organe fixe 20 qui présente un rétrécissement de section équivalente, et donc dans ce cas tronconique. On comprend que le caractère élastique de l'élément déformable 15 permet le retour, par effet ressort, dudit élément déformable élastiquement 15 à la position initiale de repos, lorsque la surpression est évacuée, notamment par retour du liquide lave-glace en sens inverse de circulation.

La figure 6 illustre plus en détails un dispositif de distribution 2 de liquide lave-glace selon un aspect de l'invention, pour un système de nettoyage d'au moins une surface vitrée 3 avant et/ou arrière d'un véhicule automobile dans lequel est intégré le dispositif limiteur de pression 1 selon le premier mode de réalisation de l'invention. Le dispositif limiteur de pression 1 est positionné entre une pompe 5 de liquide lave-glace et au moins un balai d'essuyage 6 comportant des moyens de projection du liquide lave-glace pourvus d'orifices de projection répartis dans la direction longitudinale du conduit formant la rampe d'acheminement et de projection du balai d'essuyage 6. Le dispositif limiteur de pression 1 se connecte, par son raccord d'entrée 12 formé par le premier organe mobile 10, sur un tuyau d'arrivée 8 de liquide lave-glace relié à la sortie de la pompe 5 et, par son raccord de sortie 22 formé par le deuxième organe fixe 20, sur un tuyau de circulation 9 de liquide lave-glace relié par ailleurs au balai d'essuyage 6 par l'intermédiaire d'un embout 7' du connecteur 7. Dans une variante, le dispositif limiteur de pression 1 est directement installé à la sortie de la pompe 5 par soudage ou collage.

On va maintenant décrire, en se référant aux figures 7 à 9 un dispositif limiteur de pression 101 selon un second mode de réalisation de l'invention, selon lequel, comme précédemment, une portion mobile 111 d'un premier organe mobile 110 coopère avec un deuxième organe fixe 120 en cas de surpression.

La figure 7 illustre l'agencement intérieur du dispositif limiteur de pression 101 en fonctionnement normal du dispositif de distribution 102 du liquide lave-glace (visible en figure 9), c'est-à-dire lorsque la pression de liquide lave-glace est inférieure ou égale à 1,5 bar. Dans ce second mode de réalisation, le deuxième organe fixe 120 comporte, en complément des éléments précédemment décrits dans le premier mode de réalisation, une canule de purge 35 du liquide lave-glace, positionnée en amont de la portion d'étranglement 126 du conduit interne 125 et qui s'étend selon une direction perpendiculaire à celle du conduit interne 125 et déterminée par l'axe longitudinal X. La canule de purge 35 forme un canal débouchant sur le conduit interne au niveau d'un orifice interne 36. La canule de purge 35 est apte à être connectée de façon étanche, par l'intermédiaire d'un raccord de purge 32 constitué d'une gorge périphérique 34 et d'un embout conique 33, sur un tuyau d'évacuation 52 du liquide lave-glace permettant le retour dudit liquide vers le réservoir 104 de liquide lave-glace et/ou sur un tuyau d'évacuation 53 de ce liquide lave-glace permettant le retour du liquide vers une zone d'évacuation extérieure au véhicule, ces tuyaux d'évacuation étant visibles en figure 9.

Par ailleurs, le premier organe mobile 110 diffère de ce qui précède en ce qu'il comporte, entre l'élément déformable élastiquement 115 et l'élément d'obturation 116, une portion cylindrique intermédiaire 30 positionnée dans le prolongement immédiat de l'élément déformable élastiquement 115. Cette portion cylindrique intermédiaire 30 comporte un conduit interne agencé dans le prolongement axial des orifices traversants 119, réalisés conformément au premier mode de réalisation dans les parois en opposition 118, 118' participant à former l'élément déformable élastiquement 115, et elle est délimitée extérieurement par une enveloppe externe pleine 31 munie au voisinage de l'élément d'obturation 116 d'un orifice de dégagement latéral 37 communiquant avec le conduit interne, en périphérie de la face d'obstruction (non visible sur les figures 7 et 8) de l'élément d'obturation 116. De la sorte, le liquide lave glace est susceptible de passer à travers la portion cylindrique intermédiaire, à l'intérieur de l'enveloppe 31, et de déboucher en aval de celle-ci par l'orifice de dégagement latéral 37.

Ceci est notamment le cas en fonctionnement normal, lorsque l'élément déformable élastiquement 115 est en position de repos, l'enveloppe externe pleine de la portion cylindrique intermédiaire 30 obstruant l'extrémité interne 36 de la canule de purge 35 de manière à empêcher toute évacuation de liquide lave-glace par la canule de purge 35. Le liquide lave-glace circule alors librement, depuis le raccord d'entrée 112, dans le premier organe mobile 110, traverse le conduit interne de la portion cylindrique intermédiaire 30, arrive en butée sur la face d'obstruction du flux de l'élément d'obturation 116, s'écoule par l'au moins un orifice de dégagement latéral 37 de manière à contourner l'élément d'obturation 116 pour sortir par le raccord de sortie 122 du deuxième organe fixe 120 qui constitue l'extrémité de sortie du dispositif limiteur de pression 101.

La figure 8 illustre le dispositif limiteur de pression 101 en surpression, c'est-à-dire lorsque la pression de liquide lave-glace est supérieure à 1,5 bar, habituellement entre 4 et 5 bar. Le liquide lave-glace exerce alors une force de poussée sur la face d'obstruction du flux de l'élément d'obturation 116 telle qu'elle provoque l'allongement de l'élément déformable élastiquement 115 dans le sens de circulation du liquide lave-glace, du fait notamment de la butée du collet 117 dans le lamage 27, conformément à ce qui a pu être décrit au sujet du dispositif limiteur de pression selon le premier mode de réalisation. Dans ce cas, les parois en opposition de cet élément déformable élastiquement 115 s'écartent suffisamment de sorte que l'élément d'obturation 116 peut atteindre la portion d'étranglement 126 du conduit interne 125 du deuxième organe fixe 120 et l'obstruer. Cet allongement de l'élément déformable élastiquement 115 provoque, outre le déplacement de l'élément d'obturation 116, le déplacement de la portion cylindrique intermédiaire 30 ce qui a pour effet de, en même temps que l'élément d'obturation 116 obstrue, par complémentarité de forme, la portion d'étranglement 126 du conduit interne 125 du deuxième organe fixe 120, dégager l'extrémité interne 36 de la canule de purge 35. Le liquide lave-glace ne peut alors circuler en direction du raccord de sortie 122 du dispositif limiteur de pression 101 et s'évacue par la canule de purge 35.

On comprend que la forme de l'élément déformable élastiquement 115 permet le retour, par effet ressort, dudit élément déformable élastiquement 115 à la position initiale de repos, lorsque la surpression est évacuée par la canule de purge 35. Comme dans le premier mode de réalisation, l'élément d'obturation 116 a, de préférence, une forme de tête conique, apte à obstruer la portion 126 du conduit interne cylindrique 125 du deuxième organe fixe 120 qui présente un rétrécissement de section, de préférence tronconique.

La figure 9 illustre un dispositif de distribution 102 de liquide lave-glace d'un système de nettoyage d'au moins une surface vitrée avant et/ou arrière d'un véhicule automobile dans lequel est intégré le dispositif limiteur de pression 101 selon le second mode de réalisation de l'invention. Le dispositif limiteur de pression 101 est positionné entre une pompe 105 de liquide lave-glace et au moins un balai d'essuyage 106 comportant des moyens de projection du liquide lave-glace pourvus d'orifices de projection répartis dans la direction longitudinale du conduit formant la rampe d'acheminement et de projection du balai d'essuyage 106. Le dispositif limiteur de pression 101 se connecte, par son raccord d'entrée 112, sur un tuyau d'arrivée 108 de liquide lave-glace relié à la sortie de la pompe 105 et, par son raccord de sortie 122 sur un tuyau de circulation 109 de liquide lave-glace relié au balai d'essuyage 106 par l'intermédiaire d'un embout 107' du connecteur 107. Le dispositif limiteur de pression 101 se connecte également, par son raccord de purge 32 de la canule de purge 35 sur un tuyau d'évacuation 52, 53 du liquide lave-glace permettant le retour dudit liquide vers le réservoir 104 de liquide lave-glace et/ou vers une évacuation standard.

La description qui précède explique clairement comment l'invention permet d'atteindre les objectifs qu'elle s'est fixée et notamment de proposer un dispositif limiteur de pression apte à évacuer toute surpression dans un circuit de liquide lave-glace d'un système de nettoyage d'au moins une surface vitrée avant et/ou arrière d'un véhicule automobile et à éviter toute fuite dans le balai d'essuyage, notamment au niveau des connexions du connecteur hydraulique de la rampe d'acheminement et de projection du liquide lave-glace.

L'invention ne saurait se limiter aux modes de réalisation spécifiquement donnés dans ce document à titre d'exemples non limitatifs, et s'étend en particulier à tous moyens équivalents et à toute combinaison techniquement opérante de ces moyens.

## Revendications

1. Dispositif limiteur de pression (1 ; 101) d'un fluide circulant dans un système de nettoyage d'au moins une surface vitrée d'un véhicule automobile, comportant un premier organe mobile (10; 110) comportant une portion mobile (11 ; 111) insérée dans un conduit interne (25, 26 ; 125, 126) d'un deuxième organe fixe (20 ; 120), ladite portion mobile (11, 110) étant constituée d'au moins un élément déformable élastiquement (15 ; 115) et d'un élément d'obturation (16 ; 116) du conduit interne (25, 26 ; 125, 126) du deuxième organe fixe (20 ; 120), **caractérisé en ce que** l'au moins un élément déformable élastiquement est apte à s'allonger sous l'effet d'une poussée du liquide lave-glace sur l'élément d'obturation (16 ; 116).

2. Dispositif limiteur de pression (1 ; 101) selon la revendication précédente, **caractérisé en ce que** la portion mobile (11 ; 110) est mobile entre une première position, ou position de repos, autorisant le passage de liquide lave-glace à travers le conduit interne d'une extrémité amont à une extrémité aval du dispositif, et une deuxième position obstruant le conduit interne (25, 26 ; 125, 126) du deuxième organe fixe (20 ; 120).

3. Dispositif limiteur de pression (1; 101) selon l'une quelconque des revendications 1 ou 2, **caractérisé en ce que** l'élément d'obturation (16 ; 116) présente une tête de forme complémentaire à celle d'une portion d'étranglement (26 ; 126) du conduit interne (25 ; 125) du deuxième organe fixe (20; 120).

4. Dispositif limiteur de pression (1; 101) selon l'une quelconque des revendications précédentes, **caractérisé en ce que** le premier organe mobile (10 ; 110) est constitué d'un raccord d'entrée (12 ; 112), d'un collet (17 ; 117) et de ladite portion mobile (11 ; 111).

5. Dispositif limiteur de pression (1 ; 101) selon la revendication précédente, **caractérisé en ce que** le collet (17 ; 117) constitue une surépaisseur apte à venir en butée d'arrêt dans un lamage (27) du deuxième organe fixe (20 ; 120).

6. Dispositif limiteur de pression (1 ; 101) selon la revendication précédente, en combinaison avec la revendication 3, **caractérisé en ce que** la distance entre l'extrémité libre de l'élément d'obturation (16; 116) et le collet (17; 117), lorsque la portion mobile (11 ; 111) est dans sa position de repos, est inférieure à la distance entre le lamage (27) et la portion d'étranglement (26 ; 126) du deuxième organe fixe (20 ; 120).

7. Dispositif limiteur de pression (1; 101) selon l'une quelconque des revendications 4 à 6, **caractérisé en ce que** l'élément déformable élastiquement (15 ; 115) est constitué d'au moins deux parois (18, 18' ; 118, 118') en opposition reliées entre elles à une extrémité et connectées respectivement à une base portant le collet (17; 117) et à l'élément d'obturation (16) ou à une portion intermédiaire (30) connectée à l'élément d'obturation (116).

8. Dispositif limiteur de pression (1 ; 101) selon la revendication précédente, **caractérisé en ce que** les parois en opposition (18, 18' ; 118, 118') comportent chacune un orifice traversant (19 ; 119).

9. Dispositif limiteur de pression (1; 101) selon l'une des revendications précédentes, **caractérisé en ce que** l'élément d'obturation (16 ; 116) possède une face d'obstruction (16') du flux du liquide lave-glace, perpendiculaire à l'axe d'allongement du dispositif limiteur de pression ou inclinée par rapport à un plan perpendiculaire à cet axe d'allongement.

10. Dispositif limiteur de pression (1 ; 101) selon l'une des revendications précédentes, en combinaison avec la revendication 3, **caractérisé en ce que** l'élément déformable élastiquement (15 ; 115) et l'élément d'obturation (16 ; 116) sont inscrits dans une enveloppe de diamètre externe inférieure au diamètre intérieur du conduit interne (25; 125) en amont de la portion d'étranglement (26 ; 126).

11. Dispositif limiteur de pression (101)selon l'une quelconque des revendications précédentes, en combinaison avec la revendication 3, **caractérisé en ce que** le deuxième organe fixe (120) comporte une canule de purge (35), positionnée en amont de la portion d'étranglement (126) du conduit interne (125) et qui s'étend selon une direction perpendiculaire à la direction de ce conduit interne.

12. Dispositif de distribution de liquide lave-glace (2 ; 102), **caractérisé en ce qu'**il comprend un dispositif limiteur de pression (1 ; 101) selon l'une quelconque des revendications précédentes.

13. Dispositif de distribution de liquide lave-glace (2 ; 102) selon la revendication précédente, **caractérisé en ce que** le dispositif limiteur de pression (1 ; 101) est positionné entre une pompe de liquide lave-glace (5 ; 105) et au moins un balai d'essuyage (6 ; 106) comportant des moyens de projection du liquide lave-glace constitués d'orifices de projection répartis dans la direction longitudinale du conduit formant la rampe d'acheminement et de projection dudit balai d'essuyage.

14. Dispositif de distribution de liquide lave-glace (2 ; 102) selon la revendication précédente, **caractérisé en ce que** le dispositif limiteur de pression (1 ; 101) est connecté, par son raccord d'entrée (12 ; 112), sur un tuyau d'arrivée (8 ; 108) de liquide lave-glace relié à la sortie de la pompe (5 ; 105) et, par son raccord de sortie (22 ; 122) sur un tuyau de circulation (9 ; 109) de liquide lave-glace relié au balai d'essuyage (6 ; 106).

15. Système de nettoyage d'au moins une surface vitrée d'un véhicule automobile comprenant un dispositif de distribution de liquide lave-glace (2 ; 102) équipé d'un dispositif limiteur de pression (1 ; 101) selon l'une quelconque des revendications 1 à 11.

## Patentansprüche

1. Druckbegrenzungsvorrichtung (1; 101) für ein in einem System zur Reinigung wenigstens einer Glasfläche eines Kraftfahrzeugs zirkulierendes Fluid, welche ein bewegliches erstes Organ (10; 110) aufweist, das einen beweglichen Abschnitt (11; 111) aufweist, der in einen inneren Kanal (25, 26; 125, 126) eines festen zweiten Organs (20; 120) eingesetzt ist, wobei der bewegliche Abschnitt (11, 111) aus wenigstens einem elastisch verformbaren Element (15; 115) und einem Verschlusselement (16; 116) des inneren Kanals (25, 26; 125, 126) des festen zweiten Organs (20; 120) besteht,
**dadurch gekennzeichnet, dass** das wenigstens eine elastisch verformbare Element geeignet ist, sich unter der Wirkung eines Druckes der Scheibenwaschflüssigkeit auf das Verschlusselement (16; 116) zu dehnen.

2. Druckbegrenzungsvorrichtung (1; 101) nach dem vorhergehenden Anspruch **dadurch gekennzeichnet, dass** der bewegliche Abschnitt (11; 111) zwischen einer ersten Position, oder Ruheposition, die den Durchfluss von Scheibenwaschflüssigkeit durch den inneren Kanal von einem stromaufwärtigen Ende zu einem stromabwärtigen Ende der Vorrichtung ermöglicht, und einer zweiten Position, die den inneren Kanal (25, 26; 125, 126) des festen zweiten Organs (20; 120) verschließt, beweglich ist.

3. Druckbegrenzungsvorrichtung (1; 101) nach einem der Ansprüche 1 oder 2, **dadurch gekennzeichnet, dass** das Verschlusselement (16; 116) ein Kopfstück mit einer Form aufweist, die zu derjenigen eines Drosselabschnitts (26; 126) des inneren Kanals (25; 125) des festen zweiten Organs (20; 120) komplementär ist.

4. Druckbegrenzungsvorrichtung (1; 101) nach einem der vorhergehenden Ansprüche, **dadurch gekennzeichnet, dass** das bewegliche erste Organ (10; 110) aus einem Einlassanschlussstück (12; 112), einem Bund (17; 117) und dem beweglichen Abschnitt (11; 111) besteht.

5. Druckbegrenzungsvorrichtung (1; 101) nach dem vorhergehenden Anspruch, **dadurch gekennzeichnet, dass** der Bund (17; 117) eine Überdicke bildet, die geeignet ist, in einer Senkung (27) des festen zweiten Organs (20; 120) zum Anschlag zu kommen.

6. Druckbegrenzungsvorrichtung (1; 101) nach dem vorhergehenden Anspruch in Verbindung mit Anspruch 3, **dadurch gekennzeichnet, dass** der Abstand zwischen dem freien Ende des Verschlusselements (16; 116) und dem Bund (17; 117), wenn sich der bewegliche Abschnitt (11; 111) in seiner Ruheposition befindet, kleiner als der Abstand zwischen der Senkung (27) und dem Drosselabschnitt (26; 126) des festen zweiten Organs (20; 120) ist.

7. Druckbegrenzungsvorrichtung (1; 101) nach einem der Ansprüche 4 bis 6, **dadurch gekennzeichnet, dass** das elastisch verformbare Element (15; 115) aus wenigstens zwei gegenüberliegenden Wänden (18, 18'; 118, 118') besteht, die an einem Ende miteinander verbunden sind und mit einem Basisteil, das den Bund (17; 117) trägt, bzw. mit dem Verschlusselement (16) oder mit einem mit dem Verschlusselement (116) verbundenen Zwischenabschnitt (30) verbunden sind.

8. Druckbegrenzungsvorrichtung (1; 101) nach dem vorhergehenden Anspruch, **dadurch gekennzeichnet, dass** die gegenüberliegenden Wände (18, 18'; 118, 118') jeweils eine Durchgangsöffnung (19; 119) aufweisen.

9. Druckbegrenzungsvorrichtung (1; 101) nach einem der vorhergehenden Ansprüche, **dadurch gekennzeichnet, dass** das Verschlusselement (16; 116) eine Seite zum Sperren (16') des Stroms der Scheibenwaschflüssigkeit besitzt, die senkrecht zur Verlängerungsachse der Druckbegrenzungsvorrichtung ist oder bezüglich einer zu dieser Verlängerungsachse senkrechten Ebene geneigt ist.

10. Druckbegrenzungsvorrichtung (1; 101) nach einem der vorhergehenden Ansprüche in Verbindung mit Anspruch 3, **dadurch gekennzeichnet, dass** das elastisch verformbare Element (15; 115) und das Verschlusselement (16; 116) in eine Hülle mit einem Außendurchmesser einbeschrieben sind, der kleiner als der Innendurchmesser des inneren Kanals (25; 125) stromaufwärts des Drosselabschnitts (26; 126) ist.

11. Druckbegrenzungsvorrichtung (101) nach einem der vorhergehenden Ansprüche in Verbindung mit Anspruch 3, **dadurch gekennzeichnet, dass** das feste zweite Organ (120) ein Entleerungsröhrchen (35) aufweist, das stromaufwärts des Drosselabschnitts (126) des inneren Kanals (125) positioniert ist und das sich in einer Richtung erstreckt, die zur Richtung dieses inneren Kanals senkrecht ist.

12. Vorrichtung zur Abgabe von Scheibenwaschflüssigkeit (2; 102), **dadurch gekennzeichnet, dass** sie eine Druckbegrenzungsvorrichtung (1; 101) nach einem der vorhergehenden Ansprüche umfasst.

13. Vorrichtung zur Abgabe von Scheibenwaschflüssigkeit (2; 102) nach dem vorhergehenden Anspruch, **dadurch gekennzeichnet, dass** die Druckbegrenzungsvorrichtung (1; 101) zwischen einer Pumpe für Scheibenwaschflüssigkeit (5; 105) und wenigstens einem Wischerblatt (6; 106) angeordnet ist, welches Mittel zum Spritzen der Scheibenwaschflüssigkeit aufweist, die aus Spritzöffnungen bestehen, die in der Längsrichtung der Leitung verteilt sind, welche das Förder- und Spritz-Verteilerrohr des Wischerblattes bildet.

14. Vorrichtung zur Abgabe von Scheibenwaschflüssigkeit (2; 102) nach dem vorhergehenden Anspruch, **dadurch gekennzeichnet, dass** die Druckbegrenzungsvorrichtung (1; 101) über ihr Einlassanschlussstück (12; 112) an einen Zuleitungsschlauch (8; 108) für Scheibenwaschflüssigkeit angeschlossen ist, der mit dem Auslass der Pumpe (5; 105) verbunden ist, und über ihr Auslassanschlussstück (22; 122) an einen Zirkulationsschlauch (9; 109) für Scheibenwaschflüssigkeit, der mit dem Wischerblatt (6; 106) verbunden ist.

15. System zur Reinigung wenigstens einer Glasfläche eines Kraftfahrzeugs, welches eine Vorrichtung zur Abgabe von Scheibenwaschflüssigkeit (2; 102) umfasst, die mit einer Druckbegrenzungsvorrichtung (1; 101) nach einem der Ansprüche 1 bis 11 ausgestattet ist.

## Claims

1. Device (1; 101) for limiting the pressure in a fluid circulating in a system for cleaning at least one glazed surface of a motor vehicle, having a movable first member (10; 110) having a movable portion (11; 111) inserted in an internal duct (25, 26; 125, 126) of a fixed second member (20; 120), said movable portion (11, 111) being formed by at least one elastically deformable element (15; 115) and an element (16; 116) for shutting off the internal duct (25, 26; 125, 126) of the fixed second member (20; 120), **characterized in that** the at least one elastically deformable element is able to lengthen under the effect of the washer fluid pushing on the shut-off element (16; 116).

2. Pressure limiting device (1; 101) according to the preceding claim, **characterized in that** the movable portion (11; 111) is movable between a first position, or rest position, allowing the washer fluid to pass through the internal duct from an upstream end to a downstream end of the device, and a second position obstructing the internal duct (25, 26; 125, 126) of the fixed second member (20; 120).

3. Pressure limiting device (1; 101) according to either one of Claims 1 and 2, **characterized in that** the shut-off element (16; 116) has a head with a shape complementary to that of a constriction portion (26; 126) of the internal duct (25; 125) of the fixed second member (20; 120).

4. Pressure limiting device (1; 101) according to any one of the preceding claims, **characterized in that** the movable first member (10; 110) is formed by an inlet connector (12; 112), a flange (17; 117) and said movable portion (11; 111).

5. Pressure limiting device (1; 101) according to the preceding claim, **characterized in that** the flange (17; 117) constitutes an overthickness that is able to come into stopping abutment in a counterbore (27) of the fixed second member (20; 120).

6. Pressure limiting device (1; 101) according to the preceding claim, in combination with Claim 3, **characterized in that** the distance between the free end of the shut-off element (16; 116) and the flange (17; 117), when the movable portion (11; 111) is in its rest position, is less than the distance between the counterbore (27) and the constriction portion (26; 126) of the fixed second member (20; 120).

7. Pressure limiting device (1; 101) according to any one of Claims 4 to 6, **characterized in that** the elastically deformable element (15; 115) is formed by at least two opposing walls (18, 18'; 118, 118') that are connected together at one end and connected respectively to a base bearing the flange (17; 117) and to the shut-off element (16) or to an intermediate portion (30) connected to the shut-off element (116).

8. Pressure limiting device (1; 101) according to the preceding claim, **characterized in that** the opposing walls (18, 18'; 118, 118') each have a through-orifice (19; 119).

9. Pressure limiting device (1; 101) according to one of the preceding claims, **characterized in that** the shut-off element (16; 116) has a face (16') for obstructing the flow of the washer fluid, perpendicular to the axis of extension of the pressure limiting device or inclined with respect to a plane perpendicular to this axis of extension.

10. Pressure limiting device (1; 101) according to one of the preceding claims, in combination with Claim 3, **characterized in that** the elastically deformable element (15; 115) and the shut-off element (16; 116) are inscribed in an envelope with an outside diameter smaller than the inside diameter of the internal duct (25; 125) upstream of the constriction portion (26; 126) .

11. Pressure limiting device (101) according to any one of the preceding claims, in combination with Claim 3, **characterized in that** the fixed second member (120) has a purge nozzle (35), which is positioned upstream of the constriction portion (126) of the internal duct (125) and extends in a direction perpendicular to the direction of this internal duct.

12. Washer fluid distribution device (2; 102) **characterized in that** it comprises a pressure limiting device (1; 101) according to any one of the preceding claims.

13. Washer fluid distribution device (2; 102) according to the preceding claim, **characterized in that** the pressure limiting device (1; 101) is positioned between a washer fluid pump (5; 105) and at least one windscreen wiper (6; 106) having washer fluid spray means formed by spray orifices distributed in the longitudinal direction of the duct forming the feeding and spraying line of said windscreen wiper.

14. Washer fluid distribution device (2; 102) according to the preceding claim, **characterized in that** the pressure limiting device (1; 101) is connected, by its inlet connector (12; 112), to a washer fluid inlet pipe (8; 108) connected to the outlet of the pump (5; 105), and, by its outlet connector (22; 122), to a washer fluid circulation pipe (9; 109) connected to the windscreen wiper (6; 106).

15. System for cleaning at least one glazed surface of a motor vehicle, comprising a washer fluid distribution device (2; 102) equipped with a pressure limiting device (1; 101) according to any one of Claims 1 to 11.
